# EUROPEAN PATENT APPLICATION

(11) **EP 2 876 725 A1**
(43) Date of publication of application: **27.05.2015**
(21) Application number: 14193834.0
(22) Date of filing: 19.11.2014
(51) Int. Cl.: H01M 10/42, H01M 2/34, H02J 7/00

(54) **Protection apparatus for rechargeable battery**

(30) Priority: 20.11.2013 KR 20130141456
(71) Applicant: Samsung SDI Co., Ltd., Yongin-si, Gyeonggi-do (KR)
(72) Inventor: Kim, Duk-Jung, Gyeonggi-do, Yongin-si (KR)
(74) Representative: Gulde & Partner

(57) **Abstract**

The described technology relates generally to a protection apparatus for a rechargeable battery. An exemplary embodiment provides a protection apparatus for a rechargeable battery (1) comprising: a battery unit (10) connected to a charger (2) through first and second external ports (P1, P2) and including a plurality of unit cells (C1,...,C6) adapted to be charged by receiving a charge current from the charger (2); a relay (30) for blocking the charge current supplied to the battery unit (10); and a connection portion (20) that is configured to be deformed according to an internal pressure of the battery unit (10) and electrically connecting the battery unit (10) and the relay (30).

## Description

### BACKGROUND

### 1. Field

The described technology relates generally to a protection apparatus of a rechargeable battery. More particularly, the described technology relates generally to a protection apparatus for preventing an overcharge of a rechargeable battery.

### 2. Description of the Related Art

In general, a rechargeable battery as a battery that can be repeatedly charged and discharged can be a nickel-hydrogen (Ni-MH) battery and a lithium (Li) ion battery. The rechargeable battery is used as an energy source of a mobile device, an electric vehicle, a hybrid vehicle, and an electric device, and can have various shapes according to the kind of device employing the battery.

A low-capacity rechargeable battery is used for portable small electronic devices such as cellular phones, notebook computers, and camcorders, and a large-capacity rechargeable battery may be used as a power supply for driving a motor for a hybrid car, etc.

The rechargeable battery is used as a single cell like a small-sized electronic device, or may be used in a module state in which a plurality of cells for driving a motor are electrically connected or a pack state in which a plurality of modules are electrically connected.

When the rechargeable battery is abnormally overcharged, an inner voltage of the rechargeable battery is increased such that a gas is generated, and internal pressure is increased by the generated gas such that a case of the rechargeable battery may be expanded and explode. Accordingly, a protection apparatus for preventing the abnormal overcharge of the rechargeable battery is required.

### SUMMARY

An exemplary embodiment provides a protection apparatus for a rechargeable battery for preventing an abnormal overcharge thereof.

A protection apparatus for a rechargeable battery according to an exemplary embodiment comprises: a battery unit connected to a charger through first and second external ports and including a plurality of unit cells charged by receiving a charge current from the charger; a relay blocking the charge current supplied to the battery unit; and a connection portion that is deformed according to an internal pressure of the battery unit and electrically connecting the battery unit and the relay.

The relay may include a switch comprising one terminal connected to an external port and the other terminal connected to one first electrode among a plurality of unit cells; and a coil comprising one terminal connected to the connection portion and the other terminal connected to one second electrode among a plurality of unit cells and controlling driving of the switch by receiving a voltage of two terminals of the first electrode and the second electrode as a driving voltage through the connection portion.

A plurality of unit cells may respectively comprise an electrode assembly including the first electrode and the second electrode, and a case receiving the electrode assembly. The connection portion may comprise a first shorting plate integrally formed with at least one case among a plurality of unit cells, deformed according to an internal pressure of the case, and electrically connected to the first electrode; and a second shorting plate disposed to be separated from the first shorting plate and electrically connected to one terminal of the coil, and the second shorting plate may physically contact the first shorting plate by a deformation of the first shorting plate. The second shorting plate may be insulated from the case and formed outside the case. Preferably, a first terminal of the connection portion is coupled to the first electrode of a first selected unit cell and a second electrode of the coil is connected to the second electrode of a second selected unit cell. Preferably, the number of unit cells comprised between the first electrode and the second electrode ranges between 20% and 80% of the total number of unit cells, more preferably, between 40% and 60%, and even more preferably it corresponds to 50% of the total number of unit cells.

A protection apparatus for a rechargeable battery according to another exemplary embodiment comprises: a battery unit connected to a charger through first and second external ports and including a plurality of battery modules charged by receiving a charge current from the charger; a relay blocking the charge current supplied to the battery unit; and a connection portion that is deformed according to an internal pressure of the battery unit and electrically connecting the battery unit and the relay.

The relay may comprise: a switch including one terminal connected to the external port and the other terminal connected to one first electrode among a plurality of battery modules; and a coil including one terminal connected to the connection portion and the other terminal connected to one second electrode among a plurality of battery modules and controlling driving of the switch by receiving a voltage of two terminals of the first electrode and the second electrode as a driving voltage through the connection portion.

A plurality of battery modules may respectively include: a plurality of unit cells respectively including an electrode assembly including the first electrode and the second electrode and a case receiving the electrode assembly; and a module case receiving a plurality of unit cells.

At least one connection portion may be formed among a plurality of unit cells included in at least one battery module among a plurality of battery modules. The protection apparatus may further comprise: first shorting plate integrally formed with a case of at least one unit cell, deformed according to an internal pressure of the case, and electrically connected to the first electrode; and a second shorting plate disposed to be separated from the first shorting plate and electrically connected to one terminal of the coil, and the second shorting plate may physically contact the first shorting plate by deformation of the first shorting plate. The second shorting plate may be formed on at least one module case among a plurality of battery modules. Preferably, a first terminal of the connection portion is coupled to the first electrode of a first selected battery module and a second electrode of the coil is connected to the second electrode of a second selected battery module. Preferably, the number of battery modules comprised between the first electrode and the second electrode ranges between 20% and 80% of the total number of battery modules, more preferably, between 40% and 60%, and even more preferably it corresponds to 50% of the total number of battery modules.

According to an exemplary embodiment of the present invention the protection apparatus may physically block the charge current supplied to the rechargeable battery from the charger when the rechargeable battery is in the abnormal overcharge state.

Also, by disposing the relay stopping the charge current to the external power source line between the charger and the rechargeable battery and driving the relays by using the cell voltage or the module voltage, the overcharge may be prevented through the packaging unit such as the rechargeable battery module or the rechargeable battery pack.

Further, it is not necessary to install an element to prevent the overcharge for each unit cell such that the design margin and the strength may be obtained.

### BRIEF DESCRIPTION OF THE DRAWINGS

FIG. 1 is a circuit diagram of a protection apparatus for a rechargeable battery in a normal charge state according to an exemplary embodiment.
FIG. 2 ia circuit diagram of the protection apparatus of Fig. 1 in an abnormal overcharge state.
FIG. 3 is a schematic diagram of the protection apparatus for the rechargeable battery shown in FIG. 1.
FIG. 4 is a detailed schematic diagram of the connection portion 20 shown in FIG. 3.
FIG. 5 is a circuit diagram of a protection apparatus for a rechargeable battery according to another exemplary embodiment.
FIG. 6 is a schematic diagram of the protection apparatus for the rechargeable battery shown in FIG. 5.
FIG. 7 is a detailed schematic diagram of the connection portion 200 shown in FIG. 6.

### DETAILED DESCRIPTION

In the following detailed description, only certain exemplary embodiments have been shown and described, simply by way of illustration. As those skilled in the art would realize, the described embodiments may be modified in various different ways, all without departing from the scope of the present invention. Accordingly, the drawings and description are to be regarded as illustrative in nature and not restrictive. Like reference numerals designate like elements throughout the specification.

Throughout this specification and the claims that follow, when it is described that an element is "coupled" to another element, the element may be "directly coupled" to the other element or "electrically coupled" to the other element through a third element. In addition, unless explicitly described to the contrary, the word "comprise" and variations such as "comprises" or "comprising" will be understood to imply the inclusion of stated elements but not the exclusion of any other elements.

Exemplary embodiments that can be realized by a person skilled in the art will now be described with reference to drawings.

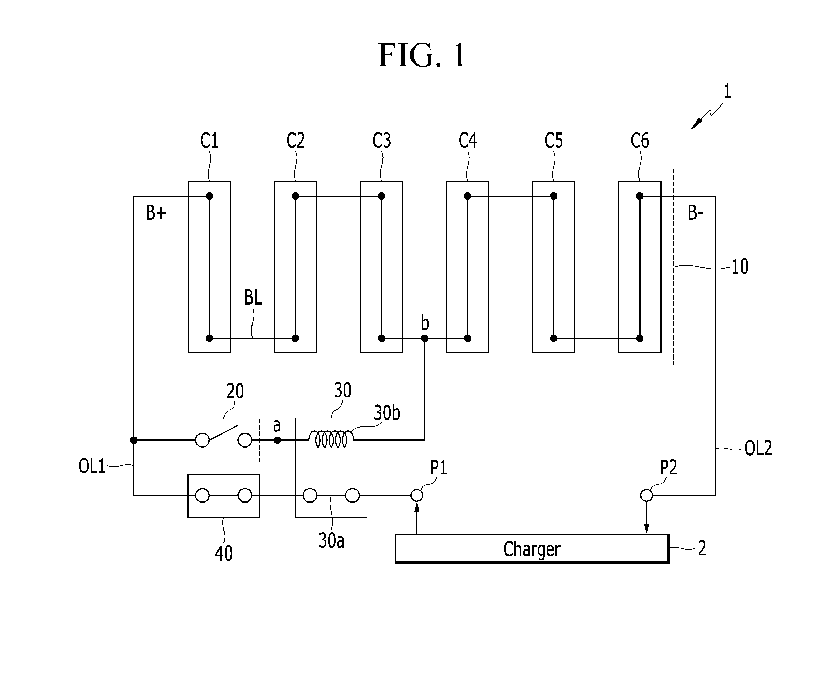

FIG. 1 is a circuit diagram of a protection apparatus for a rechargeable battery according to an exemplary embodiment.

Referring to FIG. 1, a protection apparatus for a rechargeable battery 1 according to an exemplary embodiment includes a battery unit 10, a connection portion 20, a relay 30, and a fuse 40. The battery unit 10 shown in FIG. 1 is a rechargeable battery module, and is connected to a charger 2 through external ports P1 and P2 to be charged. Also, the battery unit 10 is connected to an external load (not shown) through the external ports P1 and P2 to be discharged.

The battery unit 10 includes first to sixth unit cells C1-C6 in series. B+ and B- shown in FIG. 1 represent high current terminals, and represent a positive terminal and a negative terminal of the first to sixth unit cells C1-C6. Here, the battery unit 10 includes six unit cells C1-C6, however an exemplary embodiment is not limited thereto, and the number of the unit cells may be changed according to change of design based on user's needs.

The positive terminal of one unit cell among the first to sixth unit cells C1-C6 is connected to the negative terminal of an adjacent unit cell through a bus bar BL. Also, the positive terminal of the first unit cell C1 and the negative terminal of the sixth unit cell C6 are respectively connected to the external power source lines OL1 and OL2. The first to sixth unit cells C1-C6 receive a charge current flowing through external power source lines OL1 and OL2 to charge a predetermined voltage.

The connection portion 20 selectively transmits a driving voltage to the relay 30 according to a charge state of the battery unit 10. Here, the connection portion 20 forms a physical conductive line electrically connecting one positive terminal among the first to sixth unit cells C1-C6 and the relay 30.

In detail, the connection portion 20 acts as the conductive line that is physically disconnected when the battery unit 10 is in a normal charge state, and acts as the conductive line that is physically connected when the battery unit 10 is in an abnormal overcharge state.

The connection portion 20 may be disposed on at least one unit cell among the first to sixth unit cells C1-C6. Hereafter, the connection portion 20 is disposed on the first unit cell C1, however the present invention is not limited thereto, and a position and the number of connection portions 20 may be variously selected.

The relay 30 receives the driving voltage through the connection portion 20 to selectively block the charge current supplied to the first to sixth unit cells C1-C6. Here, the driving voltage of the relay 30 is guided from each cell voltage of the first to sixth unit cell C1-C6. For example, when the driving voltage of the relay 30 is 12 V and each cell voltage of the first to sixth unit cells C1-C6 is 4 V, the relay 30 may be driven with the cell voltage of the first to third unit cells C1-C3. However, the number of unit cells comprised between a first terminal of the connection portion 20 and a second terminal of the relay 30 may vary according to the driving voltage of the relay 30.

When the connection portion 20 acts as the physical disconnected conductive line, the relay 30 connects the charger 2 and the external power source lines OL1 and OL2. Also, when the connection portion 20 acts as the physical connected conductive line, the relay 30 disconnects the connection between the charger 2 and the external power source lines OL1 and OL2. That is, the charge current supplied to the first to sixth unit cells C1-C6 is blocked by the driving of the relay 30.

The relay 30 includes a coil 30b turning a switch 30a on/off, and the switch 30a. The switch 30a is connected between the external power source line OL1 and the external port P1. The coil 30b includes a connection point a connected to the connection portion 20 and a connection point b connected to a bus line BL between the third unit cell C3 and the fourth unit cell C4. However, the position of the node b may be changed according to the driving voltage of the relay 30 and the cell voltage of the unit cells C1-C6. The fuse 40 is connected between the external power source line OL1 and the switch 30a.

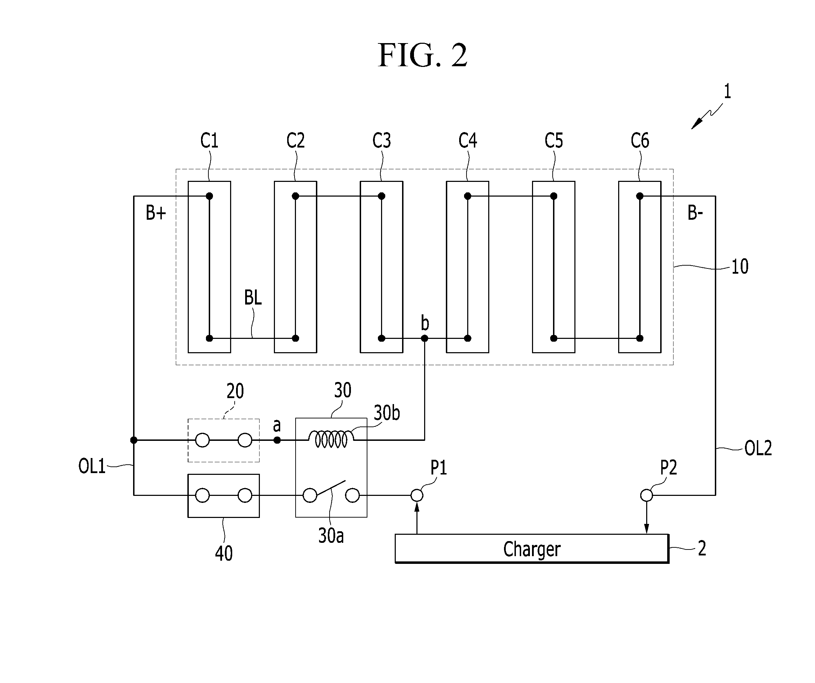

An operation of the protection apparatus for the rechargeable battery having the above-described constitutions according to an exemplary embodiment will be described with reference to FIG. 2.

FIG. 2 is a view to explain an operation of a protection apparatus for a rechargeable battery according to an exemplary embodiment.

First, when the battery unit 10 is in a normal charge state, the connection portion 20 acts as a physical disconnected conductive line, as shown in FIG. 1. At this time, the switch 30a of the relay 30 is in the turned-on state.

Accordingly, if the charger 2 is connected through the external ports P1 and P2, the charge current flowing through the external power source lines OL1 and OL2 is supplied to the first to sixth unit cells C1-C6. Thus, the voltage of a predetermined level is charged to the first to sixth unit cells C1-C6.

In this state, if the battery unit 10 is abnormally overcharged such that the internal pressure is increased, the connection portion 20 acts as a physical connected conductive line.

Thus, the driving voltage from the unit cells comprised between the first terminal connected to the connection portion 20 and the connection point b connected to the coil 30b is supplied to the relay 30, and the switch 30a is turned into the off state by the coil 30b of the relay 30, as shown in FIG. 2. Accordingly, the charge current flowing to the external power source lines OL1 and OL2 is blocked, and the charging of the first to sixth unit cells C1-C6 is stopped.

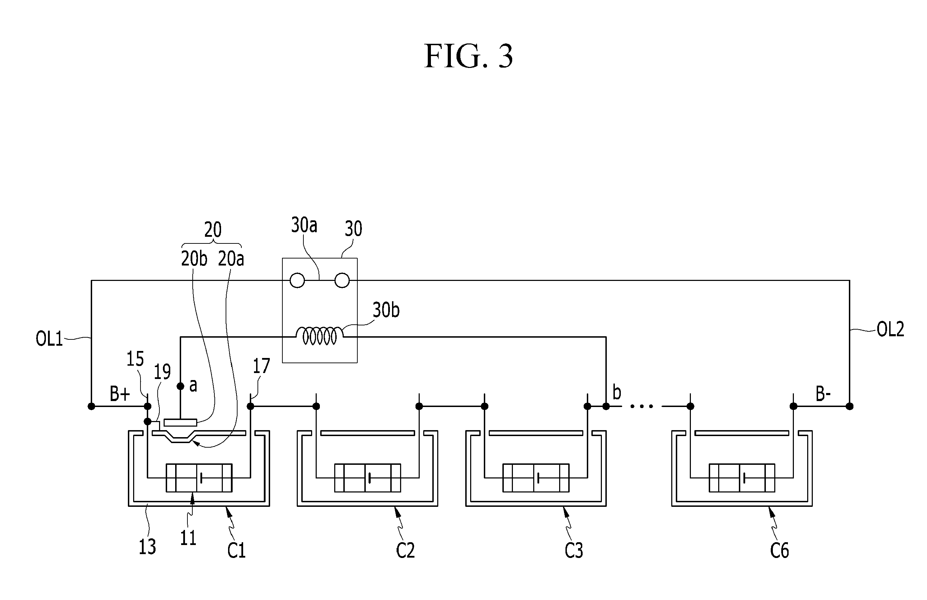

FIG. 3 is a schematic diagram of the protection apparatus for the rechargeable battery shown in FIG. 1 as a view showing a connection relationship between the battery unit 10, the connection portion 20, and the relay 30.

Referring to FIG. 3, the first to sixth unit cells C1-C6 are disposed in one direction with a predetermined interval therebetween. The first to sixth unit cells C1-C6 according to an exemplary embodiment respectively have a general structure including an electrode assembly 11 in which a positive electrode plate and a negative electrode plate are disposed via a separator interposed therebetween.

Here, the first to sixth unit cells C1-C6 as lithium ion secondary batteries are formed with a rectangular shape. An exemplary embodiment is not limited thereto, and may be applied to a battery of various shapes such as a lithium polymer battery or a cylindrical battery.

The electrode assembly 11 is housed in a case 13, and includes a positive terminal 15 and a negative terminal 17 protruding outside the case 13. The positive terminal 15 and the negative terminal 17 may be formed with a bolt shape wherein screw threads are formed in an external circumferential surface thereof. The case 13 may be formed of a metal such as aluminum or stainless steel.

The connection portion 20 is disposed on the first unit cell C1, and includes a first shorting plate 20a and a second shorting plate 20b. The first shorting plate 20a is formed to be convex towards an inside direction of the case 13, and a shape thereof is inverted by the internal pressure of the case 13.

Here, the first shorting plate 20a is electrically connected to the positive terminal 15 of the first unit cell C1 through a connection tab 19. The connection tab 19 may be extended from the positive terminal 15, and a shape thereof is not limited.

Also, the second shorting plate 20b is disposed to face the first shorting plate 20a and is separated from the first shorting plate 20a. The second shorting plate 20b is electrically connected to the relay 30.

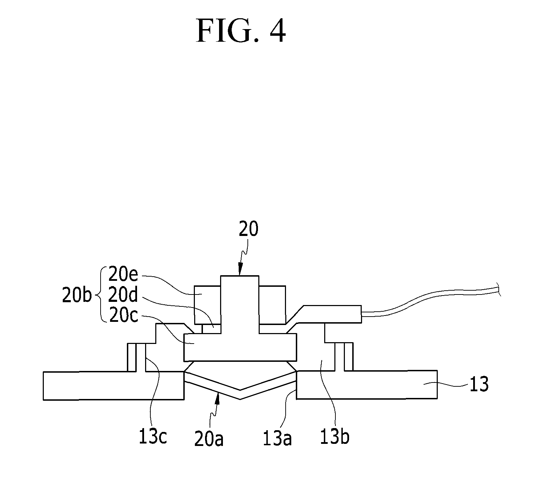

FIG. 4 is a detailed schematic diagram of the connection portion 20 shown in FIG. 3.

Referring to FIG. 4, the connection portion 20 includes the first shorting plate 20a and the second shorting plate 20b. The first shorting plate 20a is integrally formed with the case 13 and is disposed on a shorting hole 13a of the case 13.

The second shorting plate 20b is disposed on the shorting hole 13a of the case 13 to be separated from the first shorting plate 20a. Here, the second shorting plate 20b includes a bolt 20c, a ring terminal 20d, and a nut 20e.

The bolt 20c is partially buried in an insulator 13b fixed to the case 13. The insulator 13b is formed on the case 13 by insert molding, and includes a through hole (not shown) at the position corresponding to the shorting hole 13a. The case 13 may include a fixing tab 13c fixing the insulator 13b.

The ring terminal 20d is coupled to the bolt 20c and is electrically connected to the relay 30 through a wire that is pressed and connected to an end thereof. The nut 20e is coupled to the bolt 20c to fix the ring terminal 20d.

When the battery is in an abnormal overcharge state, the internal pressure inside the case 13 increases and acts on the first shorting plate 20a so that the first shorting plate 20a assumes an inverted shape - i.e. with a convex portion extending toward the bolt 20c - and is physically contacting the bolt 20c. Thus, the first shorting plate 20a is electrically connected to the relay 30 through the wire of the ring terminal 20d.

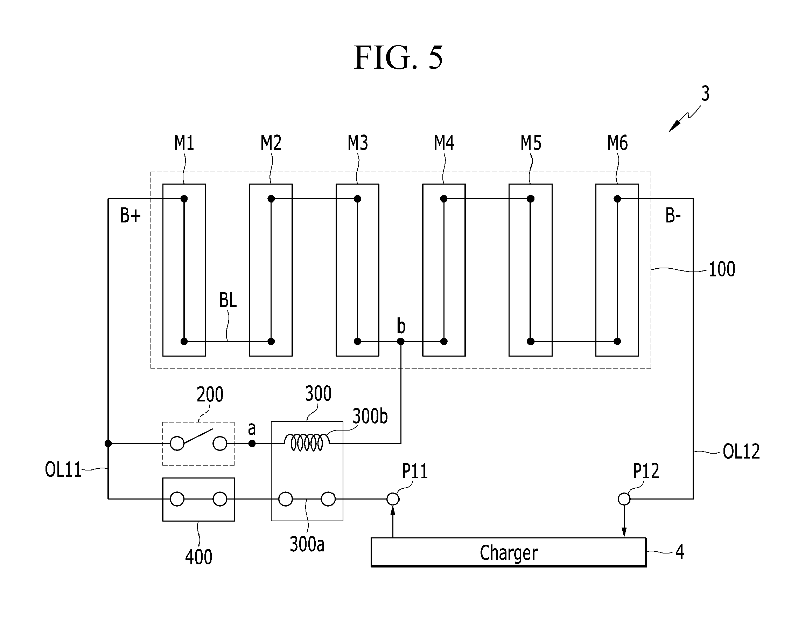

FIG. 5 is a circuit diagram of a protection apparatus for a rechargeable battery according to another exemplary embodiment.

Referring to FIG. 5, a protection apparatus for the rechargeable battery 3 according to another exemplary embodiment includes a battery unit 100, a connection portion 200, a relay 300, and a fuse 400. The battery unit 100 shown in FIG. 5 shows a rechargeable battery pack including first to sixth battery modules M1-M6, and is connected to a charger 4 through external ports P11 and P12 to be charged.

The first to sixth battery modules M1-M6 are connected in series, and the positive terminal of the first battery module M1 and the negative terminal of the sixth battery module M6 are respectively connected to the external power source lines OL11 and OL12. The first to sixth battery modules M1-M6 receive the charge current flowing through the external power source lines OL11 and OL12 to be charged with the predetermined voltage.

The connection portion 200 selectively transmits the driving voltage to the relay 300 according to the charge state of the battery unit 100. When the battery is in an abnormal overcharge state, the connection portion 200 acts as a physical conductive line electrically connecting one positive terminal among the first to sixth battery modules M1-M6 and the relay 30. For example, the connection portion 200 is disposed on the first battery module M1, and forms the physical conductive line connecting the positive terminal of the first battery module M1 and the relay 300.

The relay 300 receives the driving voltage through the connection portion 200 to selectively block the charge current supplied to the first to sixth battery modules M1-M6. The driving voltage of the relay 300 is guided from each module voltage of the first to sixth battery modules M1-M6. For example, when the driving voltage of the relay 300 is 36 V and each module voltage of the first to sixth battery modules M1-M6 is 12 V, the relay 300 may be driven with the module voltage of the first to third battery modules M1-M3. However, the number of battery modules comprised between a first terminal of the connection portion 200 and a second terminal of the relay 300 may vary according to the driving voltage of the relay 300.

When the battery is in a normal charge state, the connection portion 200 acts as a physical disconnected conductive line and the relay 300 connects the charger 4 to the external power source lines OL11 and OL12. On the contrary, when the connection portion 200 acts as a physical connected conductive line, the relay 300 disconnects the connection between the charger 4 and the external power source lines OL11 and OL12. That is, the charge current supplied to the first to sixth battery modules M1-M6 is blocked by the driving of the relay 300.

The relay 300 includes a coil 300b turning a switch 300a on/off, and the switch 300a. The switch 300a is connected to the external power source line OL11 and the external port P11.

The coil 300b includes a connection point a connected to the connection portion 200, and a connection point b connected to a bus line BL between the third battery module M3 and the fourth battery module M4. The position of the node b may be changed according to the driving voltage of the relay 300 and the module voltage. The fuse 400 is connected between the external power source line OL11 and the switch 300a.

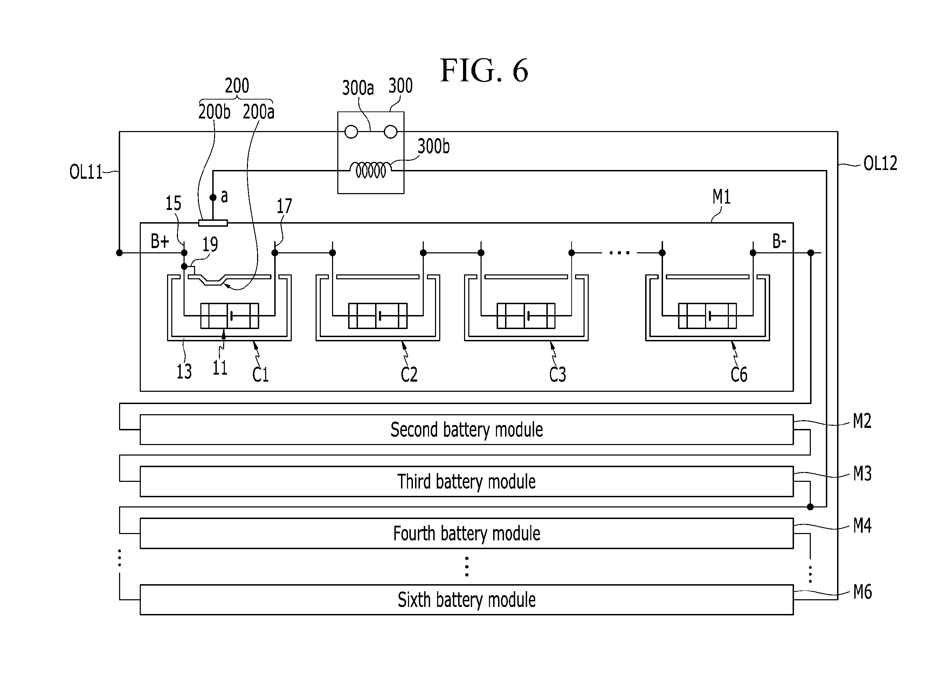

FIG. 6 is a schematic diagram of the protection apparatus for the rechargeable battery shown in FIG. 5, and shows the connection relationship between the battery unit 100, the connection portion 200, and the relay 300.

Referring to FIG. 6, each of the first to sixth battery modules M1-M6 respectively include the first to sixth unit cells C1-C6. The first to sixth unit cells C1-C6 are the same as those of FIG. 3 such that they are indicated by the same reference numerals, and the detailed description thereof is omitted.

The connection portion 200 is disposed on the first battery module M1, and includes first and second shorting plates 200a and 200b. Here, first shorting plate 200a may be disposed on at least one among the first to sixth unit cells C1-C6 in the first battery module M1, for example on the first unit cell C1.

The first shorting plate 200a is formed to be convex towards the inside direction of the case 13 of the first unit cell C1, and the shape thereof is reversed by the internal pressure of the case 13. Here, the first shorting plate 200a is electrically connected to the positive terminal 15 of the first unit cell C1 through the connection tab 19. The connection tab 19 may be extended from the positive terminal 15, and the shape thereof is not limited thereto.

Also, the second shorting plate 200b faces the first shorting plate 200a and is disposed on the module case 110 of the first battery module M1. The second shorting plate 20b is electrically connected to the relay 30. The relay 300 is disposed outside the module case 110.

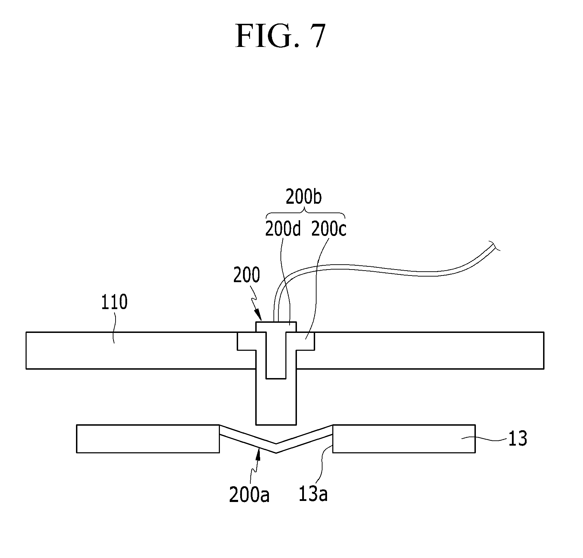

FIG. 7 is a detailed schematic diagram of the connection portion 200 shown in FIG. 6.

Referring to FIG. 7, the connection portion 200 includes the first and second shorting plates 200a and 200b. Here, the first shorting plate 200a is the same as the first shorting plate 20a shown in FIG. 4 such that the detailed description thereof is omitted.

The second shorting plate 200b is disposed to be separated from the first shorting plate 200a on the shorting hole 13a of the case 13. The second shorting plate 200b includes a bolt 200c and a contact pin 200d. The bolt 200c is inserted and fixed on the module case 110. The module case 110 may include a through hole (not shown) at the position corresponding to the shorting hole 13a.

The contact pin 200d is inserted into the bolt 200c in a press-fit manner. The contact pin 200d may include an action pin that is mechanically inserted and fixed to the bolt 200c by using elasticity. The contact pin 200d is electrically connected to the relay 300 through a wire that is pressed and connected to the end thereof.

In an abnormal overcharge state of the battery, the shape of the first shorting plate 200a is reversed by the internal pressure of the case 13 to physically contact the bolt 200c. Thus, the conductive line that is electrically connected to the relay 300 through the wire of the contact pin 200d is realized.

As described above, the protection apparatus for the rechargeable battery according to an exemplary embodiment may physically block the charge current supplied to the rechargeable battery from the charger under the abnormal overcharge state such that the overcharge may not only be prevented by control of a general battery management system (BMS) which may be electrically coupled to the rechargeable battery for battery protection.

Also, by disposing the relay so to block the charge current suppled through the external power source line from the charger to the rechargeable battery and driving the relays 30 and 300 by using the cell voltage or the module voltage, the overcharge may be prevented through the packaging unit such as the rechargeable battery module or the rechargeable battery pack.

Also, to generally prevent the overcharge, in a case of using a current interruption device (CID) blocking each current path of a plurality of unit cells by the internal pressure or an overcharge safety device (OSD) forming the conductive line bypassing the current path, a number of parts of the unit cell is increased and strength is weak. Also, in the case of applying the OSD to the unit cell, the current path must be bypassed in the state that the fuse is disconnected by guiding the large current to the fuse that is installed inside the unit cell such that a performance is deteriorated by a trade-off between the OSD and the fuse.

In contrast, in an exemplary embodiment of the present invention a connection portion is provided which is adapted to form a conductive line to apply the cell voltage or the module voltage from one unit cell in the battery module or the battery pack to the relay such that a design margin of the unit cell and the strength may be obtained, and a mechanical and structural interference with the system may be avoided.

While this disclosure has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A protection apparatus for a rechargeable battery (1, 3) comprising:
a battery unit (10, 100) connected to a charger (2, 4) through a first external port (P1, P11) and a second external port (P2, P12) and adapted to be charged by receiving a charge current from the charger (2);
a relay (30, 300) adapted to block the charge current supplied to the battery unit (10, 100); and
a connection portion (20, 200) that is adapted to be deformed according to an internal pressure of the battery unit (10, 100) and electrically connecting the battery unit (10, 100) and the relay (30, 300).

2. The protection apparatus of claim 1, wherein the battery unit (10, 100) includes a plurality of unit cells (C1,...,C6).

3. The protection apparatus of claim 2, wherein
the plurality of unit cells (C1,...,C6) respectively comprise:
an electrode assembly (11) including a first electrode and a second electrode; and
a case (13) accommodating the electrode assembly (11).

4. The protection apparatus of claim 3, wherein
the relay (30) comprises:
a switch (30a) including one terminal connected to an external port (P1) and another terminal connected to the first electrode of a first selected unit cell among the plurality of unit cells (C1,...,C6); and
a coil (30b) including one terminal connected to the connection portion (20) and another terminal connected to the second electrode of a second selected unit cell among the plurality of unit cells (C1,...,C6) and adapted to drive the switch (30a) by receiving a voltage from the two terminals connected to the first electrode and the second electrode as a driving voltage through the connection portion (20).

5. The protection apparatus of claim 4, wherein
the connection portion (20) comprises:
a first shorting plate (20a) integrally formed with the case (13) of at least one unit cell among the plurality of unit cells (C1,...,C6) configured to be deformed according to an internal pressure of the case (13), and electrically connected to the first electrode; and
a second shorting plate (20b) disposed to be separated from the first shorting plate and electrically connected to one terminal of the coil (30b), and
wherein the second shorting plate (20b) is adapted to physically contact the first shorting plate (20a) when a deformation of the first shorting plate (20a) due to the internal pressure in the case (13) occurs.

6. The protection apparatus of claim 5, wherein
the second shorting plate (20b) is insulated from the case (13) and is formed outside the case (13).

7. The protection apparatus of claim 1, wherein
the battery unity (100) comprises a plurality of battery modules (M1,...,M6), each of the plurality of battery modules (M1,..., M6) comprising:
a plurality of unit cells (C1,...,C6) respectively including an electrode assembly (11) including a first electrode and a second electrode and a case (13) accommodating the electrode assembly (11); and
a module case (110) accommodating the plurality of unit cells (C1,...,C6).

8. The protection apparatus of claim 7, wherein
the relay (300) comprises:
a switch (300a) including one terminal connected to an external port (P11) and another terminal connected to the first electrode of a first selected battery module among the plurality of battery modules (M1,..., M6); and
a coil (300b) including one terminal connected to the connection portion (200) and another terminal connected to the second electrode of a second selected battery module among the plurality of battery modules (M1,..., M6), and adapted to drive the switch (300a) by receiving a voltage from the two terminals connected to the first electrode and the second electrode as a driving voltage through the connection portion (200).

9. The protection apparatus of claim 8, wherein
at least one connection portion (200) is formed on a first selected unit cell among the plurality of unit cells (C1,...,C6) included in the first selected battery module among the plurality of battery modules (M1,..., M6).

10. The protection apparatus of claim 9, wherein the connection portion (200) comprises:
a first shorting plate (200a) integrally formed with a case (13) of the first selected unit cell (C1,...,C6), adapted to be deformed according to an internal pressure of the case (13), and electrically connected to the first electrode of the first selected battery module; and
a second shorting plate (200b) disposed to be separated from the first shorting plate (200a) and electrically connected to one terminal of the coil (300b), and
wherein the second shorting plate (200b) is configured to physically contact the first shorting plate (200a) when a deformation of the first shorting plate (200a) due to the internal pressure in the case (13) occurs.

11. The protection apparatus of claim 10, wherein
the second shorting plate (200b) is formed on the module case (110) of the first selected battery module among the plurality of battery modules (M1,..., M6).
